# EUROPEAN PATENT SPECIFICATION

(11) **EP 1 549 035 B1**
(45) Date of publication and mention of the grant of the patent: **04.05.2011**
(21) Application number: 05004103.7
(22) Date of filing: 14.05.2004
(51) Int. Cl.: H04M 3/56, H04M 3/428, H04M 3/18

(54) **Method and apparatus for improving nuisance signals in audio/video conference**
Verfahren und Gerät zur Verbesserung von störenden Signalen in einer Audio/Videokonferenz
Procédé et appareil pour améliorer des signaux ennuyeux dans une conférence audio/vidéo

(30) Priority: 06.08.2003 US 636909
(43) Date of publication of application: 29.06.2005
(62) Divisional of application: 04011487.8
(73) Proprietor: POLYCOM, INC., Milpitas, CA 95035 (US)
(72) Inventor: Eran, Knaz, 75285 Rishon LeZion (IL)
(74) Representative: Mollekopf, Gerd Willi

(56) References cited:
- EP-A- 0 982 920
- EP-A- 1 392 043
- US-A1- 2003 128 830
- US-B1- 6 349 136
- US-B1- 6 353 662

## Description

### BACKGROUND

### 1. Field of Invention

The present invention relates to the field of multipoint audio/video conferences, and more particularly to improving the quality of the conference by reducing nuisance signals.

### 2. Description of Background Art

Multipoint conferences of audio and/or video and/or multimedia are a communication between more than two participants. Commonly, conference calls may be established over a communications network, such as the Public Switched Telephone Network ("PSTN"), Integrated Services Digital Network (ISDN), Internet Protocol (IP) network, etc. The network contains Multipoint Control Units (MCU) and/or audio bridges that route and compose the communications of the participants in the call. The operation of MCUs and audio bridges is well known to those skilled in the art. An exemplary audio bridge is depicted in US Patent application number 10/072,081 (published as US 2002-0123 895 A1) or in US Patent application number 10/144,561, (published as US 2002-0188731 A1). It should be noted that the terms MCU and audio bridge may be used interchangeably herein.

A common MCU may receive audio signals from a plurality of conferees, analyze the signals and create control information such as, but not limited to, VAD (Voice Activity Detection), signal energy, and signal quality measures. Based on the control information, decisions may be made regarding whose signals will be mixed and distributed among the other conferees, or whose signal will be muted due to a conclusion that the signal is below acceptable quality. Un Acceptable Signal (UAS) is an objective criteria and may depend on the type of the conference. Exemplary criteria may be non-voice signals such as: music, DTMF, background noise, etc. The terms noisy signal, nuisance and UAS may be used interchangeably and the term nuisance may represent those terms.

There are known methods for generating information regarding signal energy, VAD and quality. Exemplary algorithms for creating this information are depicted in G723.1 (used in Annex A for the same standard); G729.1 Annex B: and GSM AMR (GSM 06.71) using the VAD algorithm GSM 06.94. A simple algorithm for Nuisance Detector (ND) may define nuisance when the signal energy (SE) is above a certain level, while the VAD indicates that the signal is not voice is ND=SE and (not VAD).

The quality of a conference depends on the automatic decisions of those methods. For example, a sensitive ND algorithm may disconnect a valid participant, while a less sensitive algorithm may add to the conference mix audio of a noisy connection. Conference mix is the composed audio signal of the selected conferees. The selection is based on the conference setup parameters and on automatic decisions based on analyzing the signals of the current speakers. There are cases where an automatic decision may frequently fail. For example, in the cases where a conferee places the conference call on hold and accepts another call, during the hold period a private branch exchange (PBX), through which the conferee is connected to, may play "music on hold over the connection to the conference, disturbing the rest of the participants. "Music on hold" may be music, broadcast radio, advertising or other signals to a party waiting on hold. Generally "Music on hold" may have the same properties as speech and therefore it may pass the criteria of common VAD and/or ND algorithms and may be transmitted to the other parties in the conference. On the other hand, a sensitive ND that is not tuned to the connection quality of a certain conferee may harm/disconnect a valid conferee. Therefore it is difficult to pre-tune the ND algorithm to different conferee's conditions.

EP 0 982 920 A2 discloses a method to prevent music-on-hold signals emanating from an offending conferee from being passed through an audio conference bridge to the other conferees. This is achieved by directing a merging/summing subsystem of the audio conference bridge to temporarily stop combining audio emanating from the offending conferee from being combined or merged onto audio channels through which the conferees communicate on the audio conference. Once the music-on-hold is terminated, the offending conferee can rejoin the conference call by sending a signal that directs the merging/summing subsystem to resume the combining the audio signals emanating from the offending conferee onto the audio channels of the other conferees.

Thus, it is evident that current technologies of automatic nuisance detection in audio/video conferencing may make the wrong decisions that reduce the quality of the conference. Therefore, there is a need in the art for a new nuisance detection method that may overcome these deficiencies.

### SUMMARY OF THE INVENTION

The invention is defined in the independent claims 1 and 9, respectively. Particular embodiments of the invention are set out in the dependent claims.

For example, in a telephone conference, in which at least one of the conferee may be connected to the conference via a PBX, the conferee may place the conference on 'HOLD' forcing a nuisance signal over the connection to the conference. Then the ND may identify this connection as a nuisance connection and send this indication to an exemplary control unit in the MCU. The control unit upon receiving an indication that the conferee channel is nuisance may mute the signal coming from this conferee. Then the exemplary controller may place an Interactive Voice Response (IVR) message over the audio signal toward the conferee. An exemplary message may inform the conferee that he has been muted and requesting the conferee to press one of the touch tone keys, for instance '1', if he just returns from 'HOLD,' to press '3' if the conferee using a noisy line/environment, or press '5' to disable the ND algorithm, etc.

If a response is not received, the message may continue for a certain period or for the rest of the conference. If one of those keys has been pushed the system according to the present invention may act as follows. If the key is '1' an exemplary embodiment of the present invention cancels the mute situation and enables the conferee to be heard. If the key is '3' the exemplary embodiment of the present invention may reduce the sensitivity of the ND algorithm. Then the control unit enables the conferee to be heard in the conference while keeping a record of this adjustment. If the new level is above this tolerance the exemplary controller may instruct the conferee that he is too noisy and refuses to add the conferee's audio to the conference. If the key is '5' the exemplary embodiment of the present invention may disable the ND algorithm and connects the nuisance conferee without condition.

Other exemplary embodiments may request, using an IVR message, from another conferee, for example the chairman of the conference, to decide whether to mute the noisy conferee or not.

Other exemplary embodiments may place a noisy conferee in push to talk (PTT) operation, instruct the noisy conferee, using an IVR message, to push momentarily any one of the keys each time he wishes to talk and to push again upon terminating his/her part.

In general, systems and methods according to the present invention may use other than DTMF feedback means to respond, such as but not limited to: voice recognition, network control signals such as ISDN 'D' channel, control packets over IP communication, etc.

Thus, systems and methods according to the present invention advantageously offer an improved algorithm that handles nuisances in conferences by requesting feedback from the nuisance conferees. The feedback from the noisy conferee may correct the automatic decision and therefore improve the quality of the conference.

Other features and advantages of the present invention will become apparent upon reading the following detailed description of the embodiments with the accompanying drawings and appended claims.

### BRIEF DESCRIPTION OF THE DRAWINGS

FIG. 1A is a block diagram showing an exemplary conference environment;
FIG. 1B is a block diagram of an embodiment according to the invention, including a general description of an audio unit in an MCU;
FIG. 2A is a block diagram of an ND that operates according to an exemplary embodiment of the present invention; and
FIG. 2B is a flow diagram showing the steps of an exemplary method for handling of a nuisance participant.

### DETAILED DESCRIPTION OF THE PREFERRED EMBODIMENT

Turning now to the figures in which like numerals represent like elements throughout the several views, exemplary embodiments of the present invention are described. For convenience, only some elements of the same group may be labeled with numerals. The purpose of the drawings is to describe exemplary embodiments and not for production. Therefore features shown in the figures are chosen for convenience and clarity of presentation only.

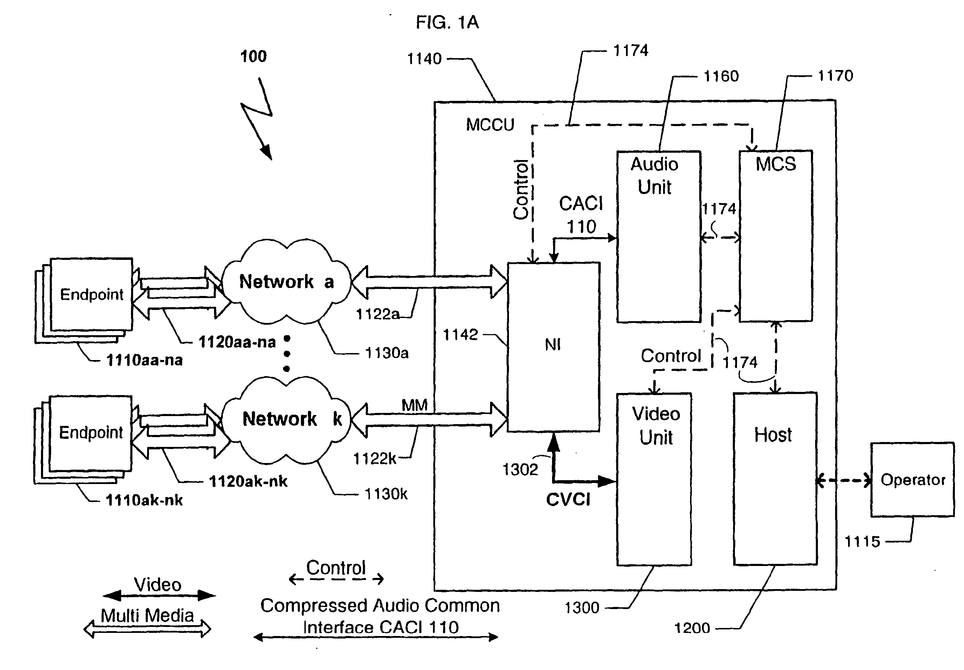

FIG. 1A is an exemplary block diagram illustrating a general description of a conference environment **100**. The conference environment may have endpoints **1110aa-nk,** operator **1115**, multimedia communications **1120aa-nk & 1122a-k**, networks **1130a-k**, and Multimedia Conference Control Unit (MCCU) **1140**. In one exemplary embodiment, the MCCU **1140** may include at least one Network Interface (NI) **1142**, Compressed Audio Common Interface (CACI) **110**, audio unit **1160**, Management and Control System (MCS) **1170**, control signals **1174**, a host **1200**, and video unit **1300**. Other exemplary embodiments may not have a video section and may be used for audio conferences only. MCCU 1140 may handle a nuisance conferee by using embodiments according to the present invention.

The pluralities of endpoints **1110aa-nk** are connected via the plurality of networks **1130a-k** to the MCCU **1140**. The MCCU **1140** may be an MCU, or an audio only multipoint control unit (an audio bridge), for example. The MCCU **1140** and/or some or all of its components are logical units that may be implemented by hardware and/or software. The MCS **1170** may be a control module and may be a logical unit that controls the operation of the MCCU **1140**.

An endpoint is a terminal on a network, capable of providing one way or two-way audio and/or visual communication with other terminals or with the MCCU **1140**. The information communicated between the terminals and/or the MCCU **1140** may include control signals, indicators, audio information, video information, and data. A terminal may provide any combination of several different types of inputs and/or outputs, such as speech only, speech and data, a combination of speech and video, or a combination of speech, data, and video. In case of audio conference, the endpoint may be common telephone, cellular telephone etc.

The NI **1142** receives multimedia communications **1122a-k** via a plurality of networks **1130a-k** and multimedia communications **1120aa-nk** from the plurality of the endpoints **1110aa-nk**, and processes the media communication according to communication standards that are used by each type of network, such as, but not limited to, H.323, H.321, H.324, H.324M, SIP, and/or H.320 ISDN, PSTN etc. The NI **1142** then delivers compressed audio, compressed video, compressed data, and control streams to appropriate logical modules in the MCCU **1140**. Some communication standards require that the process of the NI **1142** include demultiplexing the incoming multimedia communication into compressed audio, compressed video, compressed data and control streams. In the opposite direction, the NI **1142** receives the separate streams from the various units (e.g., the MCS **1170**, audio unit **1160**, and/or video unit **1300**) and processes the streams according to the appropriate communication standard. The NI **1142** then transmits the streams to the appropriate network **1130a-k**.

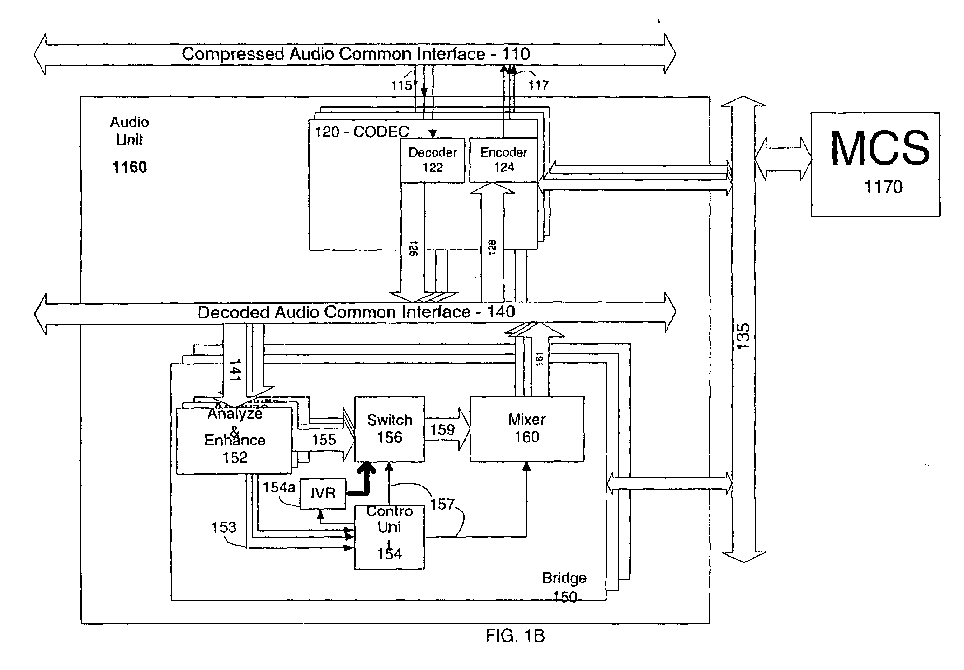

The audio unit **1160** receives the compressed audio streams of the plurality of endpoints **1110aa-nk** via the NI **1142** and CACI **110**, processes the audio streams, mixes the relevant audio streams, and sends the compressed mixed signal via the Compressed Audio Common Interface (CACI) **110** and the NI **1142** to the endpoints **1110aa-nk**. Audio unit **1160** may be a logical unit and is described below in conjunction to Fig. 1B.

The video unit **1300** may be a logical unit that receives and sends compressed video streams. The video unit **1300** includes at least one video input module that handles an input portion of a video stream **1302** from a participating endpoint and at least one video output module that generates a composed compressed video output stream that is sent via Compressed Video Common Interface (CVCI) **1302** to NI **1142** and from there to the designated endpoints **1110aa-nk**. An exemplary operation of such a video unit is described in U.S. Patent Number U.S. 6,300,973. The video unit is not mandatory for the operation of the present invention. The present invention may be used by MCCU that do not have a video unit, such as an audio bridge.

Preferably, the host **1200** communicates with the operator **1115** of the MCCU **1140**, where the operator **1115** may have an operator's station for communicating with the host **1200**. The host **1200** controls the MCCU **1140** via the MCS **1170** according to instructions from the operator **1115**. However, the operator **1115** is not mandatory. The MCCU may operate automatically without operator.

FIG. 1B is an exemplary block diagram of an embodiment of a general audio unit **1160** using an embodiment of the present invention. The embodiment of **FIG. 1B** includes a Compressed Audio Common Interface (CACI) **110**, a control bus **135**, MCS **1170**, and audio unit **1160** having compressed signals **115** and **117**, codec **120**, decoded information **126**, mixed output **128**, Decoded Audio Common Interface (DACI) **140**, and bridge **150**. The codec **120** includes a decoder **122** and an encoder **124**, while the bridge **150** includes analyze and enhance (A&E) units **152**, information signals **153**, control unit **154**, IVR unit **154a**, switch **156**, control signals **157**, selected signals **159**, mixer **160**, and mixed signals **161**.

FIG. 1B describes the flow of audio streams in one example of the present invention. Compressed audio streams, from all endpoints that are connected to an MCCU are transferred over the Compressed Audio Common Interface (CACI) **110**. The MCS **1170** may allocate a codec **120** to each one of the endpoints **1110aa-nk** (FIG. 1A).

Further, the CACI **110** carries signals to and from endpoints **1110aa-nk.** For example, the compressed signal **115** from one of the endpoints **1110aa-nk** is routed through the CACI **110** to the decoder **122** in the codec **120**, which was previously allocated to that endpoint by the MCS **1170** via control bus **135**. The decoder **122** may be a logical unit, software or hardware or a combination of those, and may decode a compressed audio stream, based on the communication standards such as, but not limited to G.711, G.723.1, G.728, G.729, MPEG or relay uncompressed audio. The decoder **122** then decodes the compressed audio stream, such as compressed signal **115**, and broadcasts the decoded signal **126** over the Decoded Audio Common Interface (DACI) **140**. The DACI **140** is a bus that may have broadcasting capabilities. The DACI **140** may be implemented for example by any one of or any combination of Time Division Multiplexing (TDM), Asynchronous Transmission Mode (ATM), Local Area Network (LAN), wireless technology, or shared memory. An appropriate bridge 150 may then grab the decoded signal from the DACI **140** and may analyze, enhance, and/or mix the decoded signal and return the output **161** to the DACI **140**.

The encoder **124** may be a logical unit. The encoder **124** may compress the output 128 of the appropriate bridge **150** forming a compressed audio stream, such as the compressed signal **117**, based on the communication standard such as, but not limited to G.71 1, G.723.1, G.728, G.729, and/or Motion Picture Expert Group (MPEG), transferred as decoded audio to an endpoint that receives decoded audio.

The MCS **1170** may use a database that holds the connection parameters (e.g., codecs and bridges, etc.) and the connection status (e.g., normal, mute etc.) of each endpoint (participant) that is currently connected to the MCCU, in every conference that is currently managed by the MCCU. The Mute (M) connection status may mean that the participant cannot be heard in the conference. The Normal (N) connection status may mean that the participant can be heard and can listen to the conference etc. According to the database, the MCS **1170** programs one or more bridges **150** to grab from the DACI **140** the decoded signals of all the participants associated with a conference that is assigned to those bridges **150**.

The decoded output **126** of any codec **120** can be grabbed by more than one bridge 150, allowing the participants to be associated with more than one conference. The decoded streams from the decoders **122** on the DACI **140** may be grabbed by the bridge **150** and then analyzed and enhanced by the analyze and enhance unit **152**. The analyze and enhance unit **152** may be a logical unit, and may include a set of algorithms for analyzing an audio stream of a participant and/or enhancing its quality, such as, but not limited to, International Telecommunications Union (ITU) G.165 (echo canceling), Dual Tone Multi-Frequency (DTMF) detection, DTMF suppression, and/or Voice Activity Detector (VAD), signal energy, and nuisance analysis.

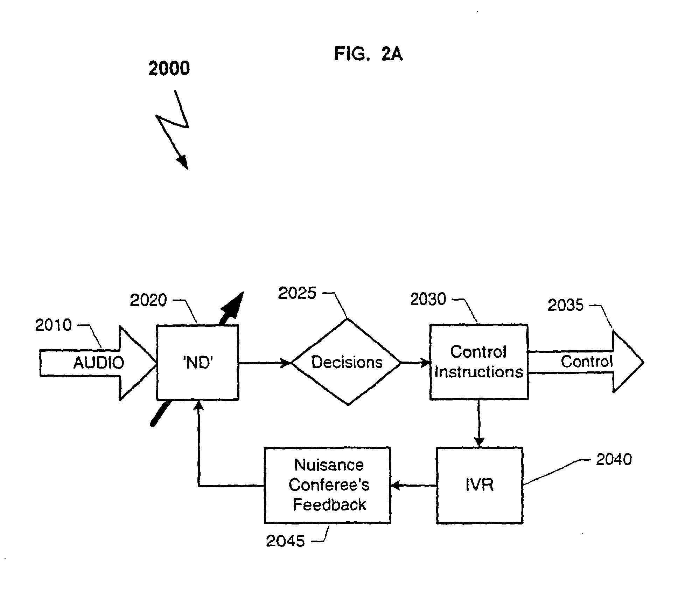

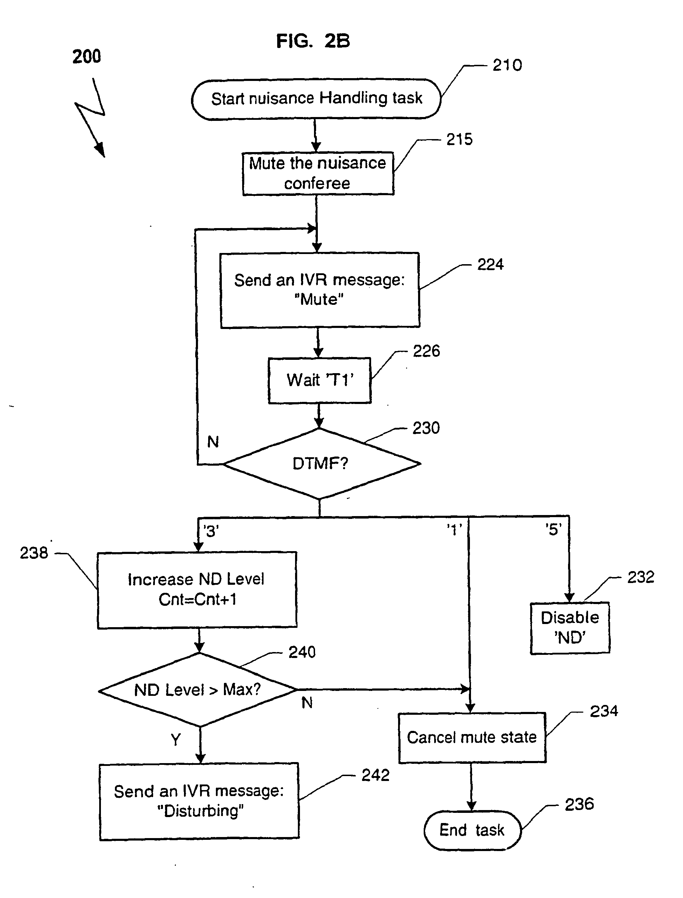

The bridge **150** may have one or more analyze and enhance units **152**. Each analyze and enhance unit **152** is assigned to a single participant and is programmed according to the connection status of that participant in the conference. The control unit **154** controls a conference that receives all signals from the analyze and enhance unit **152** and selects the participants that will be routed via switch **156** to the mixer **160**. The control unit **154** may implement an exemplary method of the present invention for handling by utilizing the analysis signals **153** coming from analyze and enhance units **152** and controlling the IVR module **154a** and switch **156**. The exemplary method is described below in conjunction with FIGS. 2A & 2B. A single bridge **150** may serve a conference, a group of conferees or a single conferee. In the last two cases more than one bridge **150** may be involved in the conference.

The mixer **160** receives the enhanced streams from all of the selected participants and/or the signal from IVR **154a** and supplies each participant with an uncompressed mixed audio stream of the selected participants and/or the signal IVR **154a**. Mixer **160** may supply more than one stream **161**, each stream having a different mix.

Signals **153** from the analyze and enhance unit **152** are sent to the control unit **154** and the enhanced decoded audio signals **155** are sent from the analyze and enhance units **152** to the switch unit **156**. The switch unit 156 is a selector that receives the decoded streams from all the participants in a conference as well as the IVR unit **154a** and transfers the selected streams to mixer **160**. The selection is based on the decisions of the control unit **154**. The decisions of the control unit **154** are based on received commands from the MCS **1170**, which define the connection status of the participants in the conference that is assigned to the bridge **150**, and the information signal **153** from the analyze and enhance unit **152**. The control unit **154** controls, via control signals 157, the switch **156**, and the mixer **160**. For example, in a case where a participant's connection status is Normal (N), the analyze and enhance unit **152** that is associated with that participant may indicate that the voice signal meets a certain criteria such as set forth by VAD, (e.g., such as the energy level being above a certain value.). Then, the control unit **154** via switch **156** selects the output **155** of the analyze and enhance unit 152, which is assigned to the participant, as one of the inputs to the mixer **160**.

In another case, when the analyze and enhance unit **152** that is associated with a participant may indicate to the control unit **154** that the participant signal is nuisance. The control unit **154** may initiate an exemplary embodiment of the present invention, as illustrated in FIG. 2A & 2B. It may instruct the switch **156** to remove the audio signal **155** that belongs to this nuisance conferee from the mixer **160** of all the other participants, placing the nuisance conferee in Mute state. In parallel, the control unit **154** may instruct switch **156** to select the IVR **154a** output as the input to the mixer of the nuisance participant.

In an alternate embodiment (not shown in the drawings) the output of the IVR unit may be delivered directly to the DACI, the encoder of the nuisance conferee having been instructed to grab the IVR's signal from the DACI instead of the output of the appropriate mixer.

The mixer **160** mixes the selected audio signals to form the mixed signals 161, and broadcasts the mixed signals **161** over the DACI **140**. Some embodiments of the bridge 150 have the capability of eliminating the voice of a speaker from the mixed signal that is aimed to the endpoint of that speaker. Control unit **154** may update the MCS **1170** with the new situation of the nuisance conferee.

The MCS **1170**, based on the connection status stored in the database, commands one or more codecs **120** to grab the mixed output **128** from the DACI **140** for listening to the conference. After grabbing the mixed output **128** from the DACI **140**, the encoder **124** encodes the decoded signal from the appropriate bridge **150**, and sends the compressed signal **117** via the CACI **110** to the appropriate participant.

The codecs **120** and the bridges **150** may be implemented by Digital Signal Processors (DSPs) such as, but not limited to, Texas Instruments DSP, TMS320C31. One DSP can include more than one unit (e.g., more than one codec and/or bridge). In the above example, the codec 120 handles a single participant's audio signal, and the bridge 150 handles one conference or part of a conference.

Referring now to FIG. 2A, which is a block diagram of an exemplary embodiment, ND **2020** is an adjustable ND that may be part of the analyze and enhance unit **152** in FIG. 1B. In the exemplary embodiment each ND **2020** unit is associated with a single conferee. The ND **2020** uses a nuisance algorithm with a current set up and a current parameters set. The ND **2020** sends indications to control unit **154** (FIG. 1B). The control unit **154**, based on these indications and existing control information, reaches decisions **2025.** According to those decisions the control unit **154** sends control instructions that influence the audio stream to the appropriate conferee. The control instructions may be sent to the mixer **160** or to switch **156** (FIG. 1B). In parallel an IVR message **2040** may be sent to the nuisance conferee requesting feedback. Upon receiving feedback from the conferee the control unit tune/adjust the ND by updating its parameters.

FIG. 2B is a flowchart depicting an exemplary method 200 according to the present invention for handling a nuisance conferee by the exemplary control unit **154** (FIG. 1B). Upon receiving a ND indication from a certain A&E unit **152**, control unit **154** starts **210** the nuisance handling task. First, in order to eliminate the nuisance from the rest of the participants, control unit **154** places **215** the nuisance participant into Mute state. The control unit **154** instructs switch **156** to prevent the audio signals **155** that belongs to this nuisance conferee from the appropriate mixer **160**.

Then the control unit instructs **224** the IVR **154a** to send a "Mute" message to the nuisance conferee. In parallel, as long as the IVR message is active, the switch **156** is instructed to select the input of the IVR unit **154a** as the only input to a mixer **160** that is associated with the nuisance conferee. An exemplary "Mute" message may be "Please be aware that you have been muted. Please press '1' upon returning from 'Hold'. Please press '3' if you were not in hold."

Other exemplary embodiments may offer other or additional options. For example, an additional option which may be added is one such as, but not limited, to "Please press '5' to disable the ND algorithm" etc.

At the end of the message the control unit may wait **226** for a period 'T1'. Period 'T1' may be in the range of a few hundreds of milliseconds up to several seconds. Exemplary values of 'T1' may be 800 milliseconds, 2 seconds etc. At the end of the waiting period, the control unit verifies **230** whether a DTMF signal as been identified by the A&E unit 152 that is associated with the nuisance conferee. If no DTMF signal has been received, which may reflect that the nuisance conferee is not listening to the conference, then the control unit returns to step **224** and continues the mute decision. Such a case may happen if the nuisance conferee has put the conference call on hold or has been disconnected. In any of those cases no harm is made either to the nuisance conferee or to the rest of the participants. The loop comprising steps **224**, **226** and **230** may continue until a DTMF signal is received. If no DTMF signal is received or a DTMF signal other than '1' or '3' or '5' has been received, the loop may continue until the end of the conference. Other embodiments may add a counter that counts the number of cycles and may disconnect the nuisance conferee after a certain number of cycles.

In case a DTMF signal has been received and has been identified as '1,' which indicates that the nuisance conferee has returned to the conference and pushed the appropriate key, then control unit **154** (FIG. 1B) instructs **234** the appropriate switch **156** to enable the audio signal **155** associated with the nuisance conferee and to disconnect the IVR unit **154a** from the appropriate mixer. Then the task is terminated **236**.

In case a DTMF signal has been received and has been identified as the number indicating that the nuisance conferee is listening to the conference, the received ND indication may be due to a noisy connection or noisy environment. In the current example the number is '3'. Then, at step **238** the level of the threshold of the ND 2020 is increased. Increasing the threshold reduces the sensitivity to noise. The present invention may set the initial threshold level to a low level. Based on the feedback from a nuisance conferee, embodiments according to the present invention adjust the setup according to the current connection.

Different embodiments of the present invention may utilize different methods for increasing the threshold level. One exemplary method may increase the level by a certain percentage from the current level each time, 10%, 30%, and 50%, for example. Other methods may use a fixed value each time; other methods may change the values according to the value of a counter (Cnt.) etc. The Cnt. is reset during the initiation of the conference and the value of the Cnt. is increased by one **238** each time that the conferee has been identified as a nuisance.

At step **240** a decision is made whether the nuisance conferee is a disturbing one. If the nuisance conferee is defined as a disturbing conferee, the Mute state of the conferee will be kept for the rest of the conference. If not, the Mute state may be canceled. An exemplary embodiment may compare **240** the new ND level to a predefined maximum level, etc. Max. The Max value is a parameter that may be set during the set up of the conference or may be a default value above which the noise is disturbing and it is better to permanently mute the nuisance conferee. Other embodiments may make a decision based on the value of the Cnt. If the value is above a certain number of interactions, it indicates that the connection is a disturbing connection and the conferee may be defined as a disturbing conferee.

If the connection is not a disturbing connection **240,** for example, the ND level is below Max, then the mute state is canceled **234** and the task is terminated **236**. The task may be restarted if a new ND indication will be received. Then the task will start at step **210** but this time the value of the Cnt. will be other than zero.

If the connection is a disturbing connection **240**, for example, the ND level is above Max, then the exemplary embodiment of the present invention may keep the mute state of the nuisance conferee and allowing the nuisance conferee only to listen to the conference. At step **242** the IVR module **154a** (FIG. 1B) is instructed to send a "Disturbing" message. An example for the "Disturbing" message may be: "Please be aware that you have been muted. In case you want to speak, please dial in again."

Other embodiments may offer the conferee the option to disconnect the current connection and re-try again. Other embodiments may request human assistance to decide how to proceed with the nuisance conferee.

In case a DTMF signal has been received and has been identified as '5', this indicates that the nuisance conferee has requested to disable the ND 2020. Such a request may be done when the involvement of this conferee is crucial in this conference and he/she must be heard even though the connection is noisy. Then the control unit disables **232** the ND 2020 and cancels the mute condition of the nuisance conferee.

Alternate embodiments of the present invention may use other than DTMF feedback means to respond, such as but not limited to: Voice Recognition, network control signals such as ISDN 'D' channel, control packets over IP communication, etc.

The present invention may handle more that one nuisance conferee. For each nuisance conferee a dedicated task may be initiated.

In this application the words "unit" and "module" are used interchangeably. Anything designated as a unit or module may be a stand-alone unit or a specialized module. A unit or a module may be modular or have modular aspects allowing it to be easily removed and replaced with another similar unit or module. Each unit or module may be any one of, or any combination of, software, hardware, and/or firmware.

Overall, embodiments according to this invention will improve the quality of a conference by handling a nuisance conferee automatically with feedback from the nuisance conferee that improves the automatic decision. The process is transparent to the rest of the conferees.

In the description and claims of the present application, each of the verbs, "comprise" "include" and "have", and conjugates thereof, are used to indicate that the object or objects of the verb are not necessarily a complete listing of members, components, elements, or parts of the subject or subjects of the verb.

The present invention has been described using detailed descriptions of embodiments thereof that are provided by way of example and are not intended to limit the scope of the invention. The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

Below different aspects of a method for improving the quality of a conference are disclosed.

### Within the range of the invention there are the following inventive concepts:

A method for improving the quality of a conference of a plurality of conferees by handling nuisance conferees, the method comprising waiting for a nuisance indication that at least one of the conferees has been identified as a nuisance conferee; informing the at least one nuisance conferee about the nuisance indication and requesting a feedback indication; and waiting for the feedback indication. In an aspect of the method the nuisance indication is detected in the audio stream. In another aspect the method further comprises placing the at least one nuisance conferee in mute state upon receiving the nuisance indication.

In a further aspect of the method the feedback indication indicates the at least one nuisance conferee has returned from hold, or the feedback indication indicates a noisy connection, or the feedback indication indicates to cancel nuisance detection. In another aspect the method further comprises removing the mute state of the at least one nuisance conferee.

In a further aspect the method further comprises increasing the nuisance detection level of the at least one nuisance conferee; and removing the mute state of the at least one nuisance conferee, or determining if the nuisance detection level is above a predetermined level and maintaining the mute state of the at least one nuisance conferee if so.

In another aspect the method further comprises requesting the at least one nuisance conferee to terminate and rejoin the conference.

In a further aspect the method further comprises canceling nuisance detection of the at least one nuisance conferee; and removing the mute state of the at least one nuisance conferee.

In a still further aspect the method further comprises determining, based on the nuisance conferee's feedback, whether the at least one nuisance conferee is a disturbing conferee and if the at least one nuisance conferee is not a disturbing conferee than the mute state is terminated or if the at least one nuisance conferee is a disturbing conferee than continuing the mute state.

In a further aspect the method further comprises informing the disturbing conferee as having been defined as being a disturbing conferee and recommending redialing or informing the disturbing conferee as having been defined as being a disturbing conferee and recommending use of a push to talk function.

Further, various aspects of a first and a second multipoint control unit are disclosed.

A first multipoint control unit for conducting and controlling at least one conference between a plurality of conferees, the multipoint control unit comprises a control unit wherein the control unit is adapted to: wait for a nuisance indication that at least one of the conferees has been identified as a nuisance conferee; place the at least one nuisance conferee in mute state; inform the at least one nuisance conferee about the mute state and request a feedback indication; and wait for the feedback indication. In an aspect of the first multipoint control unit the nuisance indication is detected in the audio stream. In a further aspect of the first multipoint control unit the feedback indication indicates the at least one nuisance conferee has returned from hold.

In another aspect of the first multipoint control unit the control unit is further adapted to remove the mute state of the at least one nuisance conferee. In still another aspect of the first multipoint control unit the feedback indication indicates increasing the nuisance detection level.

In a further aspect of the first multipoint control unit the control unit is further adapted to increase the nuisance detection level of the at least one nuisance conferee; and remove the mute state of the at least one nuisance conferee. In another aspect of the first multipoint control unit the control unit is further adapted to determine if the nuisance detection level is above a predetermined level and to maintain the mute state of the at least one nuisance conferee if so.

In a further aspect of the first multipoint control unit the control unit is further adapted to request the at least one nuisance conferee to terminate and rejoin the conference. In another aspect of the first multipoint control unit the feedback indication indicates to cancel nuisance detection.

In a further aspect of the first multipoint control unit the control unit is further adapted to cancel nuisance detection of the at least one nuisance conferee; and remove the mute state of the at least one nuisance conferee. In a further aspect of the first multipoint control unit the control unit is further adapted to determine, based on the nuisance conferee's feedback, whether the at least one nuisance conferee is a disturbing conferee and if the at least one nuisance conferee is not a disturbing conferee than to terminate the mute state or if the at least one nuisance conferee is a disturbing conferee than to continue the mute state.

In another aspect of the first multipoint control unit the control unit is further adapted to inform the disturbing conferee as having been defined as being a disturbing conferee and to recommend redialing. In a further embodiment of the first multipoint control unit the control unit is further adapted to inform the disturbing conferee as having been defined as being a disturbing conferee and to recommend use of a push to talk function.

A second multipoint control unit for conducting and controlling a conference between a plurality of conferees, the multipoint control unit comprises a network interface for receiving signals from and providing signals to the plurality of conferees; an analyze and enhance unit coupled to the network interface to analyze and enhance signals received from the plurality of conferees, including a nuisance detector providing an indication if at least one conferee is identified as a nuisance conferee, providing an indication of a feedback indication and providing the enhanced conferee signals; an interactive voice response unit having a control input and a voice output; a switch coupled to the analyze and enhance unit to receive the enhanced conferee signals and the interactive voice response unit to receive the voice output and having a control input and providing conferee signal outputs, the switch responsive to the control input to combine the enhanced conferee signals and the interactive voice response unit output to provide conferee signal outputs; a mixer coupled to the switch to receive the conferee signal outputs and to the network interface to provide output conferee signals and having a control input, the mixer responsive to the control input to mix the conferee signal outputs and interactive voice response output to provide output conferee signals; and a control unit coupled to the analyze and enhance unit to receive nuisance conferee indications and feedback indications, to the interactive noise response unit to provide control, to the switch to provide control and to the mixer to provide control, the control unit adapted to control the interactive voice response unit to provide an output to inform the at least one nuisance conferee and to control the switch and the mixer to place the at least one nuisance conferee in a mute state when the control unit receives a nuisance indication.

In an aspect of the second multipoint control unit the feedback indication indicates the at least one nuisance conferee has returned from hold and wherein the control unit is further adapted to control the switch and the mixer to remove the mute state of the at least one nuisance conferee, or the feedback indication indicates increasing the nuisance detection level.

In a further aspect of the second multipoint control unit the control unit is further adapted to control the analyze and enhance unit to increase the nuisance detection level of the at least one nuisance conferee; and control the switch and the mixer to remove the mute state of the at least one nuisance conferee.

In another aspect of the second multipoint control unit the control unit is further adapted to determine if the nuisance detection level is above a predetermined level and maintain the mute state of the at least one nuisance conferee if so.

In still another aspect of the second multipoint control unit the control unit is further adapted to control the interactive voice response unit to request the at least one nuisance conferee to terminate and rejoin the conference.

In a further aspect of the second multipoint control unit the feedback indication indicates to cancel nuisance detection and the control unit is further adapted to control the analyze and enhance unit to cancel nuisance detection of the at least one nuisance conferee; and control the switch and the mixer to remove the mute state of the at least one nuisance conferee.

In another aspect of the second multipoint control unit the control unit is further adapted to determine, based on the nuisance conferee's feedback, whether the at least one nuisance conferee is a disturbing conferee and if the at least one nuisance conferee is not a disturbing conferee than to control the switch and the mixer to terminate the mute state or if the at least one nuisance conferee is a disturbing conferee than continue the mute state.

In a further aspect of the second multipoint control unit the control unit is further adapted to control the interactive voice response unit to inform the disturbing conferee as having been defined as being a disturbing conferee and recommend redialing. Or the control unit is further adapted to control the interactive voice response unit to inform the disturbing conferee as having been defined as being a disturbing connection and to recommend use of a push to talk function.

## Claims

1. A method for improving the quality of a conference between a plurality of conferees, comprising:
assessing an audio stream (2010) of a conferee to determine (2020) if it comprises a nuisance, in turn considering the corresponding conferee as a nuisance conferee; and using an algorithm to mute (215) the nuisance conferee from the conference;
**characterized by**
requesting a feedback (230) from the nuisance conferee by presenting the nuisance conferee with at least the three options:
i) reconnecting the nuisance conferee to the conference;
ii) reconnecting the nuisance conferee using a noisy connection; and
iii) disabling (232) the algorithm in order to unmute the nuisance conferee; and
in response to the nuisance conferee selecting i), reconnecting the nuisance conferee;
in response to the nuisance conferee selecting ii), reconnecting the nuisance conferee and changing the nuisance detection threshold; and
in response to the nuisance conferee selecting iii), disabling the algorithm and unmuting the nuisance conferee.

2. The method of claim 1, wherein requesting a feedback (230) from the nuisance conferee additionally presents the nuisance conferee with the option:
iv) placing the nuisance conferee in push-to-talk operation; and
in response to the nuisance conferee selecting iv), placing the nuisance conferee in push-to-talk operation.

3. The method of claim 1 or 2, wherein requesting a feedback (230) from the nuisance conferee comprises sending a voice message (224) to the nuisance conferee.

4. The method of claim 1, 2 or 3, wherein the feedback comprises a voice message from the nuisance conferee.

5. The method of any of the preceding claims, wherein the feedback comprises a press of a button at a terminal of the nuisance conferee.

6. The method of claim 5, wherein the button generates a DTMF tone.

7. The method of claim 5, wherein the button generates at least one network control signal selected from a group consisting of an ISDN 'D' channel signal and a control packet over IP communication.

8. The method of any of the preceding claims, wherein the algorithm is only disabled for the nuisance conferee.

9. A multipoint control unit (1160) for controlling a conference between a plurality of conferees, comprising:
an analysis unit (2020), wherein the analysis unit is adapted to assess audio signals (2010) from the conferees to identify a conferee as a nuisance conferee, and adapted to send information concerning the same to a control unit (154) of the multipoint control unit (1160);
wherein the control unit (154) is adapted to use an algorithm to control a mixer (160) so as to mix the audio signals for those conferees not identified as nuisance conferees and so as to mute the identified nuisance conferee;
**characterized by**
a response unit (154a) adapted to request a feedback from the identified nuisance conferee by presenting the nuisance conferee with at least the three options:
i) reconnecting the nuisance conferee to the conference;
ii) reconnecting the nuisance conferee using a noisy connection;
iii) disabling the algorithm in order to unmute the nuisance conferee; and
wherein, in response to the nuisance conferee selecting i), the control unit (154) is adapted to reconnect the nuisance conferee to the conference;
wherein, in response to the nuisance conferee selecting ii), the control unit (154) is adapted to reconnect the nuisance conferee and changing the nuisance detection threshold; and
wherein, in response to the nuisance conferee selecting iii), the control unit (154) is adapted to disabling (232) the algorithm in order to unmute the nuisance conferee.

10. The multipoint control unit of claim 9, wherein the response unit (154a) additionally presents the nuisance conferee with the option:
iv) placing the nuisance conferee in push-to-talk operation; and
wherein, in response to the nuisance conferee selecting iv), the control unit (154) is adapted to place the nuisance conferee in push-to-talk operation.

11. The multipoint control unit of claims 9 or 10, wherein the response unit (154a) is adapted to send a voice message to the nuisance conferee when requesting a feedback.

12. The multipoint control unit of claims 9, 10 or 11, wherein the feedback comprises a press of a button at a terminal of the nuisance conferee.

13. The multipoint control unit of claim 12, wherein the button generates a DTMF tone.

14. The multipoint control unit of claim 12, wherein the button generates at least one network control signal selected from a group consisting of an ISDN 'D' channel signal and a control packet over IP communication.

15. The multipoint control unit according to any of claims 9 to 14, wherein the feedback comprises a voice message from the nuisance conferee.

16. The multipoint control unit according to any of claims 9 to 15, wherein the algorithm used by the control unit (154) to control the mixer (160) is only disabled for the nuisance conferee.

## Patentansprüche

1. Verfahren zum Verbessern der Qualität einer Konferenz zwischen einer Vielzahl von Konferenzteilnehmern, umfassend:
Beurteilen eines Audiostroms (2010) eines Konferenzteilnehmers, um festzustellen (2020), ob er eine Störung aufweist, wiederum Betrachten des entsprechenden Konferenzteilnehmers als störenden Konferenzteilnehmer; und
Verwenden eines Algorithmus zum Stummschalten (215) des störenden Konferenzteilnehmers von der Konferenz;
**gekennzeichnet durch**
Anfordern einer Rückmeldung (230) vom störenden Konferenzteilnehmer, indem dem störenden Konferenzteilnehmer mindestens die drei Optionen angeboten werden:
i) erneutes Verbinden des störenden Konferenzteilnehmers mit der Konferenz;
ii) erneutes Verbinden des störenden Konferenzteilnehmers unter Verwendung einer verrauschten Verbindung; und
iii) Deaktivieren (232) des Algorithmus, um den störenden Konferenzteilnehmer laut zu schalten; und
in Reaktion darauf, dass der störende Konferenzteilnehmer i) auswählt, erneutes Verbinden des störenden Konferenzteilnehmers;
in Reaktion darauf, dass der störende Konferenzteilnehmer ii) auswählt, erneutes Verbinden des störenden Konferenzteilnehmers und Ändern der Störerfassungsschwelle; und
in Reaktion darauf, dass der störende Konferenzteilnehmer iii) auswählt, Deaktivierens des Algorithmus und Lautschalten des störenden Konferenzteilnehmers.

2. Verfahren nach Anspruch 1, wobei das Anfordern einer Rückmeldung (230) vom störenden Konferenzteilnehmer außerdem dem störenden Konferenzteilnehmer die Option anbietet:
iv) Setzen des störenden Konferenzteilnehmers in den Push-to-Talk-Betrieb; und
in Reaktion darauf, dass der störende Konferenzteilnehmer iv) auswählt, Setzen des störenden Konferenzteilnehmers in den Push-to-Talk-Betrieb.

3. Verfahren nach Anspruch 1 oder 2, wobei das Anfordern einer Rückmeldung (230) vom störenden Konferenzteilnehmer das Senden einer Sprachmeldung (224) zum störenden Konferenzteilnehmer umfasst.

4. Verfahren nach Anspruch 1, 2 oder 3, wobei die Rückmeldung eine Sprachmeldung vom störenden Konferenzteilnehmer umfasst.

5. Verfahren nach einem der vorangehenden Ansprüche, wobei die Rückmeldung ein Drücken einer Taste an einem Endgerät des störenden Konferenzteilnehmers umfasst.

6. Verfahren nach Anspruch 5, wobei die Taste einen MFV-Ton erzeugt.

7. Verfahren nach Anspruch 5, wobei die Taste mindestens ein Netzwerksteuersignal erzeugt, das aus einer Gruppe ausgewählt ist, die aus einem ISDN-"D"-Kanalsignal und einem Steuerpaket über IP-Kommunikation besteht.

8. Verfahren nach einem der vorangehenden Ansprüche, wobei der Algorithmus nur für den störenden Konferenzteilnehmer deaktiviert wird.

9. Mehrpunkt-Steuereinheit (1160) zum Steuern einer Konferenz zwischen einer Vielzahl von Konferenzteilnehmern, aufweisend:
eine Analyseeinheit (2020), wobei die Analyseeinheit dazu ausgelegt ist, Audiosignale (2010) von den Konferenzteilnehmern zu beurteilen, um einen Konferenzteilnehmer als störenden Konferenzteilnehmer zu identifizieren, und dazu ausgelegt ist, Informationen hinsichtlich desselben zu einer Steuereinheit (154) der Mehrpunkt-Steuereinheit (1160) zu senden;
wobei die Steuereinheit (154) dazu ausgelegt ist, einen Algorithmus zu verwenden, um einen Mischer (160) zu steuern, um die Audiosignale für diejenigen Konferenzteilnehmer zu mischen, die nicht als störende Konferenzteilnehmer identifiziert werden, und um den identifizierten störenden Konferenzteilnehmer stumm zu schalten;
**gekennzeichnet durch**
eine Antworteinheit (154a), die dazu ausgelegt ist, eine Rückmeldung vom identifizierten störenden Konferenzteilnehmer anzufordern, indem dem störenden Konferenzteilnehmer mindestens die drei Optionen angeboten werden:
i) erneutes Verbinden des störenden Konferenzteilnehmers mit der Konferenz;
ii) erneutes Verbinden des störenden Konferenzteilnehmers unter Verwendung einer verrauschten Verbindung;
iii) Deaktivieren des Algorithmus, um den störenden Konferenzteilnehmer laut zu schalten; und
wobei in Reaktion darauf, dass der störende Konferenzteilnehmer i) auswählt, die Steuereinheit (154) dazu ausgelegt ist, den störenden Konferenzteilnehmer erneut mit der Konferenz zu verbinden;
wobei in Reaktion darauf, dass der störende Konferenzteilnehmer ii) auswählt, die Steuereinheit (154) dazu ausgelegt ist, den störenden Konferenzteilnehmer erneut zu verbinden und die Störerfassungsschwelle zu ändern; und
wobei in Reaktion darauf, dass der störende Konferenzteilnehmer iii) auswählt, die Steuereinheit (154) dazu ausgelegt ist, den Algorithmus zu deaktivieren (232), um den störenden Konferenzteihehmer laut zu schalten.

10. Mehrpunkt-Steuereinheit nach Anspruch 9, wobei die Antworteinheit (154a) außerdem dem störenden Konferenzteilnehmer die Option anbietet:
iv) Setzen des störenden Konferenzteilnehmers in den Push-to-Talk-Betrieb; und
wobei in Reaktion darauf, dass der störende Konferenzteilnehmer iv) auswählt, die Steuereinheit (154) dazu ausgelegt ist, den störenden Konferenzteilnehmer in den Push-to-Talk-Betrieb zu setzen.

11. Mehrpunkt-Steuereinheit nach den Ansprüchen 9 oder 10, wobei die Antworteinheit (154a) dazu ausgelegt ist, eine Sprachmeldung zum störenden Konferenzteilnehmer zu senden, wenn eine Rückmeldung angefordert wird.

12. Mehrpunkt-Steuereinheit nach den Ansprüchen 9, 10 oder 11, wobei die Rückmeldung ein Drücken einer Taste an einem Endgerät des störenden Konferenzteilnehmers umfasst.

13. Mehrpunkt-Steuereinheit nach Anspruch 12, wobei die Taste einen MFV-Ton erzeugt.

14. Mehrpunkt-Steuereinheit nach Anspruch 12, wobei die Taste mindestens ein Netzwerksteuersignal erzeugt, das aus einer Gruppe ausgewählt ist, die aus einem ISDN-"D"-Kanalsignal und einem Steuerpaket über IP-Kommunikation besteht.

15. Mehrpunkt-Steuereinheit nach einem der Ansprüche 9 bis 14, wobei die Rückmeldung eine Sprachmeldung vom störenden Konferenzteilnehmer umfasst.

16. Mehrpunkt-Steuereinheit nach einem der Ansprüche 9 bis 15, wobei der von der Steuereinheit (154) zum Steuern des Mischers (160) verwendete Algorithmus nur für den störenden Konferenzteilnehmer deaktiviert wird.

## Revendications

1. Procédé destiné à améliorer la qualité d'une conférence entre une pluralité de participants, comprenant :
l'évaluation d'un flux audio (2010) d'un participant pour déterminer (2020) s'il constitue une nuisance, en considérant successivement le participant correspondant en tant que participant constituant une nuisance, et
l'utilisation d'un algorithme pour réduire au silence (215) le participant constituant une nuisance vis-à-vis de la conférence,
**caractérisé par**
la demande d'un retour (230) auprès du participant constituant une nuisance en présentant au participant constituant une nuisance au moins les trois options suivantes :
i) reconnecter le participant constituant une nuisance à la conférence,
ii) reconnecter le participant constituant une nuisance en utilisant une connexion bruyante, et
iii) désactiver (232) l'algorithme de manière à ne plus réduire au silence le participant constituant une nuisance, et
en réponse à la sélection du participant constituant une nuisance i), reconnecter le participant constituant une nuisance,
en réponse à la sélection du participant constituant une nuisance ii), reconnecter le participant constituant une nuisance et modifier le seuil de détection de nuisance, et
en réponse à la sélection du participant constituant une nuisance iii), désactiver l'algorithme et ne plus réduire au silence le participant constituant une nuisance.

2. Procédé selon la revendication 1, dans lequel la demande d'un retour (230) auprès du participant constituant une nuisance présente additionnellement au participant constituant une nuisance l'option consistant à :
iv) placer le participant constituant une nuisance dans une opération de presser un bouton pour parler, et
en réponse à la sélection du participant constituant une nuisance iv), placer le participant constituant une nuisance dans une opération de presser un bouton pour parler.

3. Procédé selon la revendication 1 ou 2, dans lequel la demande d'un retour (230) auprès du participant constituant une nuisance comprend l'envoi d'un message vocal (224) au participant constituant une nuisance.

4. Procédé selon la revendication 1, 2 ou 3, dans lequel le retour comprend un message vocal du participant constituant une nuisance.

5. Procédé selon l'une quelconque des revendications précédentes, dans lequel le retour comprend l'enfoncement d'un bouton au niveau d'un terminal du participant constituant une nuisance.

6. Procédé selon la revendication 5, dans lequel le bouton génère une tonalité multifréquence à double code (DTMF).

7. Procédé selon la revendication 5, dans lequel le bouton génère au moins un signal de commande de réseau sélectionné parmi un groupe constitué d'un signal de canal de réseau ISDN "D" et d'un paquet de commande sur une communication IP.

8. Procédé selon l'une quelconque des revendications précédentes, dans lequel l'algorithme est seulement désactivé pour le participant constituant une nuisance.

9. Unité de commande multipoint (1160) destinée à commander une conférence entre une pluralité de participants, comprenant :
une unité d'analyse (2020), où l'unité d'analyse est conçue pour évaluer les signaux audio (2010) à partir des participants afin d'identifier un participant en tant que participant constituant une nuisance, et conçue pour envoyer des informations concernant celui-ci à une unité de commande (154) de l'unité de commande multipoint (1160),
où l'unité de commande (154) est conçue pour utiliser un algorithme afin de commander un mélangeur (160) de façon à mélanger les signaux audio pour les participants qui ne sont pas identifiés comme des participants constituant une nuisance et de façon à réduire au silence le participant identifié constituant une nuisance,
**caractérisée par**
une unité de réponse (154a) conçue pour demander un retour auprès du participant identifié constituant une nuisance en présentant au participant constituant une nuisance au moins les trois options suivantes :
i) reconnecter le participant constituant une nuisance à la conférence,
ii) reconnecter le participant constituant une nuisance en utilisant une connexion bruyante,
iii) désactiver l'algorithme de manière à ne plus réduire au silence le participant constituant une nuisance, et
où, en réponse à la sélection du participant constituant une nuisance i), l'unité qui commande (154) est conçue pour reconnecter le participant constituant une nuisance à la conférence,
où, en réponse à la sélection du participant constituant une nuisance ii), l'unité de commande (154) est conçue pour reconnecter le participant constituant une nuisance et modifier le seuil de détection de nuisance, et
où, en réponse à la sélection du participant constituant une nuisance iii), l'unité de commande (154) est conçue pour désactiver (232) l'algorithme de manière à ne plus réduire au silence le participant constituant une nuisance.

10. Unité de commande multipoint selon la revendication 9, dans laquelle l'unité de réponse (154a) présente additionnellement au participant constituant une nuisance l'option consistant à :
iv) placer le participant constituant une nuisance dans une opération de presser un bouton pour parler, et
où, en réponse à la sélection du participant constituant une nuisance iv), l'unité de commande (154) est conçue pour placer le participant constituant une nuisance dans une opération de presser un bouton pour parler.

11. Unité de commande multipoint selon la revendication 9 ou 10, dans laquelle l'unité de réponse (154a) est conçue pour envoyer un message vocal au participant constituant une nuisance lors de la demande d'un retour.

12. Unité de commande multipoint selon la revendication 9, 10 ou 11, dans laquelle le retour comprend l'enfoncement d'un bouton au niveau d'un terminal du participant constituant une nuisance.

13. Unité de commande multipoint selon la revendication 12, dans laquelle le bouton génère une tonalité multifréquence à double code (DTMF).

14. Unité de commande multipoint selon la revendication 12, dans laquelle le bouton génère au moins un signal de commande de réseau sélectionné à partir d'un groupe constitué d'un signal de canal de réseau ISDN "D" et d'un paquet de commande sur une communication IP.

15. Unité de commande multipoint selon l'une quelconque des revendications 9 à 14, dans laquelle le retour comprend un message vocal du participant constituant une nuisance.

16. Unité de commande multipoint selon l'une quelconque des revendications 9 à 15, dans laquelle l'algorithme utilisé par l'unité de commande (154) pour commander le mélangeur (160) est uniquement désactivé pour le participant constituant une nuisance.
